Europäisches Patentamt

European Patent Office

Office européen des brevets

(11) Publication number: **0 264 931**
**A2**

## (12) EUROPEAN PATENT APPLICATION

(21) Application number: **87115428.2**

(22) Date of filing: **21.10.87**

(51) Int. Cl.4: **B01D 13/04 , A61M 1/34**

(30) Priority: **23.10.86 JP 252715/86**

(43) Date of publication of application:
**27.04.88 Bulletin 88/17**

(84) Designated Contracting States:
**BE CH DE FR GB IT LI NL SE**

(71) Applicant: **KANEGAFUCHI KAGAKU KOGYO KABUSHIKI KAISHA**
**2-4 Nakanoshima 3-chome**
**Kita-ku Osaka-shi Osaka-fu(JP)**

(72) Inventor: **Eguchi, Tamiyuki**
**14-5, Koeidai 5-chome Kita-ku**
**Kobe-shi Hyogo-ken(JP)**
Inventor: **Nakatani, Masanori**
**4-10, Moriminami-machi 1-chome**
**Higashinada-ku**
**Kobe-shi Hyogo-ken(JP)**

(74) Representative: **Türk, Gille, Hrabal**
**Bruckner Strasse 20**
**D-4000 Düsseldorf 13(DE)**

(54) A membrane for the separation of blood plasma components.

(57) A membrane in the form of a hollow fiber for the separation of IgM and other blood plasma components with a volume not lower than that of IgM, having an inner diameter of 120 to 300 $\mu$m, a wall thickness of 15 to 80$\mu$m, a maximum diameter of pores on the outer surface of not less than 0.1 $\mu$m, a permeability of a dextran with mean molecular weight $1.1 \times 10^5$ of 75 to 86 %, and a permeability of a dextran with mean molecular weight $5 \times 10^5$ or not more than 24 %. The hollow fiber membrane can selectively separate IgM, which is one of immunoproteins, and other blood plasma components with a volume not lower than that of IgM. And consequently, in a treatment with the hollow fiber membrane, it is required to supply only a quite small amount of or even no plasma preparation.

EP 0 264 931 A2

## A MEMBRANE FOR THE SEPARATION OF BLOOD PLASMA COMPONENTS

The present invention relates to a membrane for the separation of blood plasma components, and more particularly to a membrane in the form of a hollow fiber for the separation of IgM, which is one of immunoproteins, and other blood plasma components with a volume not lower than that of IgM.

In recent years, there is tried a treatment for various obstinate diseases, in which after blood is taken out from the body and pathogenic substances in the blood are removed, the treated blood is returned to the body, so-called "extracorporeal circulation treatment". As generally known, when blood is taken out from the body, blood cells are physiologically quite unstable, and are easily injured. For instance, there occurs a decrease in their number because of their adhesion to the matters with which blood cells contact, hemolysis or coagulation. Therefore, in an extracorporeal circulation treatment, blood is separated into unstable blood cells and relatively stable blood plasma by centrifugation or by using a membrane, and then the blood plasma containing pathogenic substances is treated by using an adsorbent or an membrane for the separation of blood plasma components, or by the plasma exchange.

Also, if a specific immunoprotein can be selectively removed, it contributes to the elucidation of pathogenic substances and consequently to medical science.

There has been hitherto unknown an adsorbent by which IgM is selectively removed but no other immunoprotein is removed.

In a treatment in which the plasma containing pathogenic substances are replaced with a normal human blood plasma, the cost for such treatment is very high.

On the other hand, conventional membranes for the separation are also used for removing plasma components including pathogenic substances. However, though these membranes do not remove components of relatively low molecular weight, e.g. complements, blood coagulation factors or electrolytes so that such low molecular weight components can remain in the plasma, the membranes have a serious problem that they remove a large amount of important components having relatively high molecular weight, e.g. high density lipoprotein (hereinafter referred to as "HDL"), fibrinogen, immunoproteins and albumin. Therefore, when plasma is treated with the conventional membranes, at the same time of removing pathogenic substances by the membrane, it is required to supply an expensive plasma preparation containing albumin, and the like. The conventional membranes for the separation have another problem that in using them, clogging occurs with the passage of time and the filtration pressure rises very high.

Thus, conventional membranes for the separation cannot highly selectively remove only IgM and other blood plasma components with a volume not lower than that of IgM, many types of immune complexes, which are said to be the pathogenic substances causing various immune diseases. And therefore a plasma preparation is needed in the treatment with such membrane, in order to supply valuable components removed together with the pathogenic substances. However, the supply of plasma preparation is very expensive as the replacement of plasma. Moreover, in the supply of plasma preparation, there is a possibility of virus infection.

Therefore, even if the removal of components other than IgM and other blood plasma components with a volume now lower than that of IgM cannot be avoided, the components removed should be limited to such components that the removel of them do not influence on the body, and the amount of the components removed should be small so that the supply of plasma preparation is not required.

Further, in the conventional membranes for the separation, the functional part cannot be distinguished. Among such membranes, there is one having a structure similar to a filter of so-called depth type. For a superior selectivity, only the part of membrane, where the plasma filtered contacts with the membrane, should have the separation function, and it is necessary to optimize the permeability in such part.

Taking into account the above points, the present inventors have found that there can be obtained a membrane with a superior separation function which has not been hitherto obtained, by overcoming the point that in the separation of plasma components with conventional membranes for the separation, valuable plasma components such as albumin are removed in such an amount that the supply of plasma preparation is required.

By evaluating the selectivity of membranes for the separation with varying their structure in detail, there have been now found a membrane having such selectivity that in the separation of plasma components with using the membrane, IgM, which is one of immunoproteins and other blood plasma components with a volume not lower than that of IgM are removed, and blood plasma components with a volume lower than that of IgM are not removed. It has been also found that the above membrane has an advantage that in using the membrane, clogging does not occur and consequently the filtration pressure in stable for a long time.

2

In accordance with the present invention, there is provided a membrane in the form of a hollow fiber for the separation of IgM and other blood plasma components with a volume not lower than that of IgM, having an inner diameter of 120 to 300 $\mu$m, a wall thickness of 15 to 80 $\mu$m, a maximum diameter of pores on the outer surface of not less than 0.1 $\mu$m, a permeability of a dextran with mean molecular weight $1.1 \times 10^5$ of 75 to 86 %, and a permeability of a dextran with mean molecular weight $5 \times 10^5$ of not more than 24 %.

In the present invention, the permeability of a dextran is the value determined by the following procedure.

While a 0.1 % by weight aqueous solution of a dextran is transmitted to a module of 16 cm in effective length and 500 cm² in effective area of the inner surface of hollow fibers at a rate of 5 ml/min at 37°C, the aqueous solution of dextran is filtered for 1 hour at a rate of 1.5 ml/min. Then the concentration of dextran in the filtrate is measured by the Total Organic Carbon Analyzer (TOC-10B, made by Shimazu Seisakusho Kabushiki Kaisha), and the permeability is calculated according to the following formula.

$$\text{Permeability (\%)} = \frac{\text{Concentration of dextran in a filtrate}}{\text{Concentration of dextran in an original solution}} \times 100$$

As materials for the hollow fiber membrane of the present invention, various known high molecular compounds such as a cellulose acetate, a regenerated cellulose, a polyacrylonitrile, an ethylene-vinyl alcohol·copolymer, a polymethyl methacrylate, an aromatic polyamide, a polyvinylidene fluoride and an aromatic polysulfone can be used. Among them, an aromatic polysulfone is particularly preferable since the structure of the membrane made of an aromatic polysulfone can be easily controlled. Typical examples of the aromatic polysulfone are, for instance, polysulfones having the following formula (I) or (II).

$$\left[ \phantom{x} - SO_2 - \phantom{x} - O - \right]_n \qquad (I)$$

$$\left[ \phantom{x} - SO_2 - \phantom{x} - O - \overset{\displaystyle CH_3}{\underset{\displaystyle CH_3}{C}} - O - \right]_n \qquad (II)$$

Among them, the polysulfone (II) is more preferable since the structure of membrane made of the polysulfone (II) can be easily controlled in comparison with that of the polysulfone (I).

Using the above materials, the hollow fiber membrane of the present invention can be obtained by a known process for preparing membranes. A process for preparing the hollow fiber membrane made of an polysulfone is, for instance, described in Japanese Unexamined Patent Publication No. 222112/1985.

The inner diameter of the hollow fiber membrane of the present invention is 120 to 300 $\mu$m, preferably 150 to 250 $\mu$m. In case the inner diameter is less than about 120 $\mu$m, there is a possibility of denaturation of plasma proteins since the pressure drop at the time when blood plasma is passed through the membrane is so much. In case the inner diameter is more than about 300 $\mu$m, the effective area of the inner surface of hollow fibers per module becomes too small.

The wall thickness of the hollow fiber membrane of the present invention is preferably 15 to 80 $\mu$m, more preferably 25 to 50 $\mu$m. In case the wall thickness of membrane is less than about 15 $\mu$m, the mechanical strength of the membrane is too weak to be handled. In case the membrane is more than 80 $\mu$m, the effective area as a membrane per module becomes too small.

IgM has a diameter of about 100 Å. A large component among blood plasma components with a permeating ability higher than that of IgM has a diameter of about 50 Å. In order to let such large components pass through the membrane from the inside to the outside without their staying inside the membrane, accoring to the invnetors' study, there should be a lot of pores having a maximum diameter of not less than 0.1 $\mu$m on the outer surface of the membrane. As a matter of course, on the section of the membrane, there also should be pores having a diameter of not less than 0.1 $\mu$m.

In the present invention. the term "maximum diameter" means the length of the largest minor axis of the pores or openings on an arbitrary outer surface of hollow fiber as observed by a scanning electron microscope at a 10,000 x magnification.

As is presumed from the above description, the selectivity of the membrane of the present invention is based on the structure of the inner surface of membrane. That is, it is presumed that on the inner surface of membrane, there are pores through which IgM and other components with a volume now lower than that of IgM do not pass but components with a permeating ability higher than that of IgM pass, and that the pores on the outer surface or on the section are considerably larger than the pores on the inner surface. It is difficult to electron microscopically precisely determine such size of pores on the inner surface. Measuring the permeability of various molecular weight of dextrans, the present inventors have found that the permeability of blood plasma components closely corresponds to that of dextrans and thereby have determined the hollow fiber membrane of the present invention. That is, as a result of measurements of permeability of various dextrans as to the membrane of the present invnetion according to the aforementioned process, the permeability of a dextran with mean moleculr weight $1.1 \times 10^5$ was 75 to 86 %, preferably 80 to 85 %, and the permeability of a dextran with mean molecular weight $5 \times 10^5$ was not more than 24 %, preferably not more than 20 %. Beyond the above determination of the permeability, the selectivity of the hollow fiber membrane becomes poor because of less amount of IgM removed or because of removal of valuable low molecular weight plasma components.

The hollow fiber membrane of the present invention has a selectivity satisfying the conditions that IgM and other plasma components with a volume not lower than that of IgM do not pass through the membrane, the permeability of immunoproteins other than IgM, HDL, complements, albumin and the like is not less than 90 %, and the permeability of fiblinogen is 50 to 70 %. Such selectivity is stably maintained over 3 hours and during that time the filtration pressure hardly rises. Therefore, the hollow fiber membrane of the present invention is much superior in all points of selectivity, stability and capacity in comparison with conventional adsorbents or membranes for the separation. And consequently, in a treatment with the membrane of the present invention, only a quite small amount of or even no plasma preparation is required.

The present invention is more specifically described and explained by the following Example. It is to be understood that the present invention is not limited to the Example, and various changes and modifications may be made in the invention without departing from the spirit and scope thereof.

Example 1

A 20 % by weight solution of polysulfone (P-3500 made by Union Carbide Corp.) in dimethylsulfoxide was extruded from a double-ring nozzle having an outer diameter of 400 μm, an inner diameter of 250 μm and a core diameter of 150 μm at a rate of 2.5 g/min at 80°C in the air, while extruding 95 % aqueous solution of propylene glycol from the core at a rate of 1.8 g/min at 60°C, and after running in the air for 15 cm, the membrane precursor was soaked in a warmed water of 60°C, and was reeled at a rate of 50 m/min in a warmed water of 45°C. Then the membrane was washed with hot water, and was air-dried at 40°C for one day.

The membrane was observed by means of an electron microscope to find that the membrane had an inner diameter of 200 μm, a wall thickness of 30 μm, and a section having an uniform network structure with pores of about 1 μm in diameter. On the outer surface, there were a lot of pores of not more than 0.3 μm in diameter. On th4e inner surface, few pores with the maximum diameter about 0.07 μm were found.

A small module of 16 cm in effective length and 500 cm² in effective area of the inner surface of the membrane was prepared with 500 of the obtained membranes by means of a conventional process. After a 30 % by volume aqueous solution of ethanol was passed through the module to make the dried membrane hydrophilic, the aqueous solution of ethanol was replaced with water. A 0.1 % by weight aqueous solution of a dextran with mean molecular weight $1.1 \times 10^5$ and a 0.1 % by weight aqueous solution of a dextran with mean molecular weight $5 \times 10^5$ (T-110 and T-500 respectively, made by Pharmacia Fine Chemicals) were transmitted to the inside of hollow fiber at a rate of 5 ml/min at 37°C, and were filtered to the outside of hollow fiber at a rate of 1.5 ml/min. After one hour, the permeability of the dextrans was measured. The permeability of the dextran with mean molecular weight $1.1 \times 10^5$ was 83 % and the permeability of the dextrane with mean molecular weight $5 \times 10^5$ was 0 %.

Using a module prepared according to the same process as above except that the aqueous solution of ethanol was replaced with a physiological saline solution instead of water, human blood plasma was filtered and the permeability of plasma components separated was measured. At room temperature (25°C), a blood plasma whose temperature was kept at 36°C was transmitted to the inside of hollow fiber at a rate of 1.5 ml/min, and 95 % by volume of the plasma transmitted was filtered. The transmembrane pressure was 15 mmHg and it was not changed during 3 hours of continuous operating period. The term "transmembrane pressure" in the present invention means the difference between an average value of plasma pressure at the inlet of the module and plasma pressure at the outlet of the module and a value of filtrate pressure. During the operating period of 3 hours, the original plasma, the plasma at the outlet of the module and the filtrate were collected every 30 minutes, and the concentration of albumin, total protein, fibrinogen, IgG, IgA, HDL, IgM and LDL in the original plasma and the filtrate was measured. The permeability of each components was calculated according to the following formula.

$$\text{Permeability (\%)} = \frac{\text{Concentration of a component in a filtrate}}{\text{Concentration of a component in an origianal plasma}} \times 100$$

The permeability of blood plasma components was shown in Table 1.

The permeability of each blood component was not changed during three hours of continuous operating period.

## Comparative Example

A hollow fiber membrane was taken out from a commercially available module, having a good reputation for selectivity for the separation of IgM, which is made of an ethylene-vinyl alcohol copolymer, and was evaluated as the membrane of Example 1 was evaluated.

The hollow fiber membrane was observed by means of a scanning electron microscope to find that the membrane had an inner diameter of about 200 $\mu$m, a wall thickness of about 50 $\mu$m, and a section having a network structure. There were very few pores on the outer surface and there were a lot of pores of not more than 0.5 $\mu$m in diameter on the inner surface in contrast to the hollow fiber membrane of Example 1 having lots of pores on the outer surface and a few pores on the inner surface.

Using a small module prepared according to the process in Example 1 except that the treatment with an aqueous solution of ethanol was not carried out since the membrane was hydrophilic, the permiability of dextrans and of human blood plasma components was measured.

The permeability of both the dextran with mean molecular weight $1.1 \times 10^5$ and the dextran with mean molecular weight $5 \times 10^5$ was about 70 % and there was very little difference between them. When human blood plasma was filtered, the transmembrane pressure was 10 mmHg at first, and then was increased gradually. After 3 hours, the transmembrane pressure reached 40 mmHg. The permeability of plasma components was shown in Table 1.

## Table 1

| Blood plamsa conponent | Permeability (%) | |
|---|---|---|
| | Ex. 1 | Com. Ex. |
| total protein | 100* | 76 |
| albumin | 100 | 78 |
| IgG | 100 | 75 |
| IgA | 100 | 0 |
| HDL | 100 | 70 |
| fibrinogen | 60 | 0 |
| IgM | 0 | 0 |
| LDL | 0 | 0 |

\* the permeability of total protein in Ex. 1 is very nearly 100

As is apparent from the comparison of the results of Example 1 and Comparative Example, the hollow fiber membrane of the present invention is much superior in selectivity and stability in comparison with conventional membranes.

In addition to the ingredients used in the Example, other ingredients can be used in the Example as set forth in the specification to obtain substantially the same results.

## Claims

1. A membrane in the form of a hollow fiber for the separation of IgM and other blood plasma components with a volume not lower than that of IgM, having an inner diameter of 120 to 300 $\mu$m, a wall thickness of 15 to 80 $\mu$m, a maximum diameter of pores on the outer surface of not less than 0.1 $\mu$m, a permeability of a dextran with mean molecular weight $1.1 \times 10^5$ of 75 to 86 %, and a permeability of a dextran with mean molecular weight $5 \times 10^5$ of not more than 24 %.

2. The hollow fiber membrane of Claim 1, werein said permeability of a dextran with mean molecular weight $1.1 \times 10^5$ is 80 to 85 % and said permeability of a dextran with mean molecular weight $5 \times 10^5$ is not more than 20 %.

3. The hollow fiber membrane of Claim 1, which is made of an aromatic polysulfone.